# EUROPEAN PATENT SPECIFICATION

(11) **EP 4 494 474 B1**
(45) Date of publication and mention of the grant of the patent: **11.11.2026**
(21) Application number: 24188666.2
(22) Date of filing: 15.07.2024
(51) Int. Cl.: A23G 9/22, A23G 9/12, A23G 9/28, G01N 33/02, G06N 3/02, G06N 3/04, G06N 3/08, G06N 3/044, G06N 3/048, G06N 3/0464, G06N 20/00

(54) **MACHINE FOR MAKING LIQUID, SEMILIQUID OR SEMISOLID FOOD PRODUCTS AND RELATED CONTROL METHOD**
MASCHINE ZUR HERSTELLUNG VON FLÜSSIGEN, HALBFLÜSSIGEN ODER HALBFESTEN LEBENSMITTELPRODUKTEN UND ZUGEHÖRIGES STEUERUNGSVERFAHREN
MACHINE DE FABRICATION DE PRODUITS ALIMENTAIRES LIQUIDES, SEMI-LIQUIDES OU SEMI-SOLIDES ET PROCÉDÉ DE COMMANDE ASSOCIÉ

(30) Priority: 19.07.2023 IT 202300015144
(43) Date of publication of application: 22.01.2025
(73) Proprietor: Ali Group S.r.l. - Carpigiani, 20063 Cernusco sul Naviglio, Milano (IT)
(72) Inventor: TASSI, Federico, 40122 Bologna (IT); LAZZARINI, Roberto, 42100 Reggio Emilia (IT); STEFANELLI, Cesare, 40123 Bologna (IT); BELLODI, Elena, 44123 Ferrara (IT); TORTONESI, Mauro, 44123 Ferrara (IT); DAHDAL, Simon, 40018 San Pietro in Casale (Bologna) (IT)
(74) Representative: Milli, Simone

(56) References cited:
- EP-A1- 3 771 377
- EP-A1- 3 957 712
- EP-A1- 4 070 665
- EP-A1- 4 101 309
- EP-A2- 2 082 649
- EP-A2- 2 545 785
- WO-A1-2018/069253
- "Efficient Learning Machines: Theories, Concepts, and Applications for Engineers and System Designers", 30 April 2015, APRESS, ISBN: 978-1-4302-5989-3, article MARIETTE AWAD ET AL: "Efficient Learning Machines: Theories, Concepts, and Applications for Engineers and System Designers", XP055500724
- CORRADI ANTONIO ET AL: "Smart Appliances and RAMI 4.0: Management and Servitization of Ice Cream Machines", IEEE TRANSACTIONS ON INDUSTRIAL INFORMATICS, IEEE SERVICE CENTER, NEW YORK, NY, US, vol. 15, no. 2, 1 February 2019 (2019-02-01), pages 1007 - 1016, XP011708985, ISSN: 1551-3203, [retrieved on 20190204], DOI: 10.1109/TII.2018.2867643

## Description

This invention relates to a machine for making liquid or semiliquid food products, in particular, products for the ice cream, pastry or catering trade, and to a method for controlling the machine. The invention is defined in the appended claims.

Known in the prior art of the trade concerned are machines for thermally and/or mechanically processing base products which preferably have at least one liquid or semiliquid component to make a finished product of a liquid or semiliquid or semisolid type.

Known in particular with reference to the ice cream trade are machines comprising a processing container, a stirrer mounted inside the container and a thermal system associated with the container to exchange heat with the walls of the container.

In machines of this kind, the base product is thus batch frozen inside the container, that is to say, cooled by the thermal system and simultaneously stirred by the stirrer so as to convert the base product into a finished ice cream product. An example of such machines is provided by EP 2 082 649 B1, which discloses a machine for the treatment of liquid and semiliquid food mixtures comprises a mixture whipping and freezing/heating tank, a circuit for cooling and/or heating basic products of which the mixture consists, comprising a compressor driven by an electric motor, and a mixer rotating inside the tank to mix the basic products. The machine also comprises a control unit for the speed of rotation of the compressor electric motor, for regulating the compressor operating speed and varying the thermal power supplied by the compressor according to at least the quantity of mixture treated.

Generally speaking, in machines for making traditional artisanal gelato the batch freezing process is accomplished through the combined use of a refrigerating cycle and mechanical stirring. The base food product is batch frozen at a variable temperature depending on the type of process and on the composition of the mixture itself (usually included in the range -11 < T (°C) < -6). This stage in the process is characterized by rapid cooling of the mixture being stirred, which allows distributing the solid crystal phases and the gaseous phase into the structure of the ice cream without separating the solutes.

Ice cream, as is known, is a fluffy emulsion characterized by a highly specific colloidal structure which gives it its distinctive texture and organoleptic properties.

More precisely, gelato, a variant of ice cream, is a solution characterized by a liquid dispersant phase and is at once:
- an emulsion (it contains fat globules);
- a colloid (it is a heterogeneous dispersion);
- a foam (it incorporates air bubbles).

Further, it should be noted that ice cream requires the simultaneous presence of all three states of matter (solid, liquid, gas).

Moreover, it is noted that ice cream is a non-Newtonian fluid.

From the above, it is clear that ice cream is an extremely complex food, made up of several ingredients bound by different interacting forces and exhibits different physical states which influence its finished product quality, stability and properties.

The ingredients of the starting mixture are water, fats, lean milk solids, sugars, stabilizers end emulsifiers which, as they are gradually cooled and subjected to the mixing action of a stirrer, turn into a "ready ice cream", a product which arises out of the dispersion of each component in different phases.

The structure of ice cream is formed by the dispersion of air in a frozen liquid, consisting of approximately two thirds water. The aqueous phase, besides having microscopic particles of air, fats and ice crystals trapped in it, includes sucrose, lactose, other sugars and mineral salts.

Broadly speaking, therefore, four main constituent phases can be identified: ice crystals, air bubbles, fat globules and a non-frozen, viscous liquid matrix (solution of monosaccharides, polysaccharides, proteins and emulsifiers) also commonly referred to as buttermilk.

Close and accurate monitoring during the processing of the four phases has a significant effect on the physical, structural and sensory properties.

Moreover, the buttermilk, being a continuous phase that interacts with the other phases present in the ice cream, is what keeps the structure of the ice cream together as a whole and its properties depend on the composition of the mixture and on temperature.

Proper consistency and rheology of the ice cream are fundamental aspects for ice cream quality. Ice cream, besides being a non-Newtonian fluid and exhibiting thixotropic behaviour (that is, its apparent viscosity decreases with force application time) may in fact be considered as a pseudoplastic fluid whose behaviour can only be tentatively described macroscopically with specific mathematical models.

The quantity and size of the ice crystals, on the other hand, affect many properties of the finished products, such as, spoonability, hardness and melt rate, a parameter which, in turn, may be influenced by fat globule aggregation in clusters.

The role of the air bubbles is that of providing a light, fluffy consistency.

From a practical standpoint, determining when the mixture reaches a consistency (i.e. texture) that is exactly right for obtaining an optimal finished product is of fundamental importance.

Lastly, considering the complexity of ice cream, based on what is set out above, it must be stressed that even small variations in the formulation of the mixture may lead to problems of various kinds in the finished product. As to the methods for measuring or quantifying the quality of the finished ice cream, attention is drawn to the following.

Some conventional methods may be used to define the properties of the finished product (in terms of quality), such as determining the overrun, assessing the temperature, melting, i.e., the melt rate, and the panel test (sensory analysis).

In detail, the overrun is determined by comparing the weight of the mixture with that of the ice cream in a suitable calibrated container. Overrun refers to the percentage of air incorporated in the ice cream and provides an indication of consistency, softness and appearance.

Melting, or melt rate, is generally quantified by measuring the mass which drips from the product through a mesh screen as a function of time at a given temperature and is correlated with the properties of the ice crystals, hence with the structure of the ice cream.

In the panel test, specially qualified panelists with specific experience assess the general acceptability of the product, that is, its quality based on different visual, olfactory and taste aspects.

The production of ice cream is obtained through a complex interaction between different process parameters and conditions: indeed, the structural and physical changes can influence sensory and melting properties, which means that it is not easy to ascertain exactly when the product is "ready".

Prior art machines implement a variety of strategies which have been developed to monitor the production process to define when the ideal consistency is reached and the ice cream is ready to be taken out of the batch freezing cylinder.

In prior art machines of a first kind, a timer is used to control production time. Machines of this kind have evident drawbacks in that not all ice cream mixtures allow obtaining the same consistency and viscosity in the same length of time and, consequently, optimizing the production of the ice cream depends to a large extent on the operator's experience in using the machine and managing recipes.

To overcome this evident drawback, a second type of machine for making ice cream comprises product temperature sensors so as to be able to ascertain when the ice cream has reached the optimum consistency based on this parameter.

It should be noted that product temperature is a quantity that is difficult to determine uniformly in the processing chamber and, besides that, it is not possible to identify an optimum value for all types of ice cream.

That means that optimizing ice cream production, in this case too, depends largely on the operator's experience in using the machine and managing recipes.

A third type of machine comprises a device that is configured to detect a resistance opposed by the ice cream to the rotation of the stirrer (thereby indirectly measuring the hardness and viscosity of the ice cream).

This device may be mechanical or electronic, that is, based on the power input of the stirrer motor.

In such an electronic device, the values of current and voltage are processed to obtain an indirect measurement of the torque delivered by the stirrer drive motor.

In yet another prior art solution, the ice cream machine comprises a level sensor capable of detecting the presence of mixture inside the batch freezing chamber and of performing measurements of electrical conductivity to see whether the ice cream has reached the right consistency.

The principle which this solution is based on is the fact that the water present in the mixture becomes solid during processing on account of the lowering of the temperature in the batch freezing chamber, leading to a reduction in the concentration of the solutes, hence a reduction in the electrical conductivity which can be detected through electrical conductivity measurements.

The applicant has found that, whatever their kind, machines for making liquid or semiliquid food products existing to date are not capable of acting on the ice cream production process applied at present in order to overcome drawbacks such as the following, substantially in real time:
- lengthy process times;
- impossibility of batch freezing unbalanced mixtures (that is to say, mixtures in which the percentage of certain ingredients, for example, sugars, water or fats, is different from the optimum percentage for processing);
- heat exchange problems with mixtures having a high content of fats;
- possible formation of a block of ice cream inside the stirrer;
- problems of repeatability in defining the correct consistency.

Moreover, with machines for making liquid or semiliquid food products existing to date it is not possible to make a finished product of optimum quality under any mixture conditions in terms of the balance of ingredients. There is therefore a need, which is felt particularly strongly in the trade concerned, for a machine for processing liquid or semiliquid products, ice cream in particular, capable of completing the batch freezing process in an optimum manner and at the same time producing a product of optimum quality.

The aim of this invention is to meet the above-mentioned need and to overcome the above-mentioned drawbacks of the prior art by providing a machine for processing liquid and/or semiliquid products, ice cream in particular, and capable of optimizing the batch freezing process and at the same time producing a product of optimum quality, and by also providing a method for controlling the machine.

Another aim of this invention is to provide a machine for processing liquid and/or semiliquid products which allows batch freezing the ice cream in the shortest possible time without in any way negatively affecting the quality of the finished product, and also providing a method for controlling the machine.

Yet another aim of this invention is to provide a machine for processing liquid, semiliquid or semisolid products and capable of preventing potential problems during the processing cycle, and also providing a method for controlling the machine.

Yet another aim of this invention is to provide a machine for processing liquid, semiliquid or semisolid products and which allows exactly identifying the right time to extract the ice cream, that is to say, when the mixture has reached an optimum consistency.

The technical features of the invention, according to the aforesaid aims, are clearly disclosed in the claims below, and their advantages will become more evident in the detailed description that follows, with reference to the accompanying drawings which represent a purely exemplary embodiment, and in which:

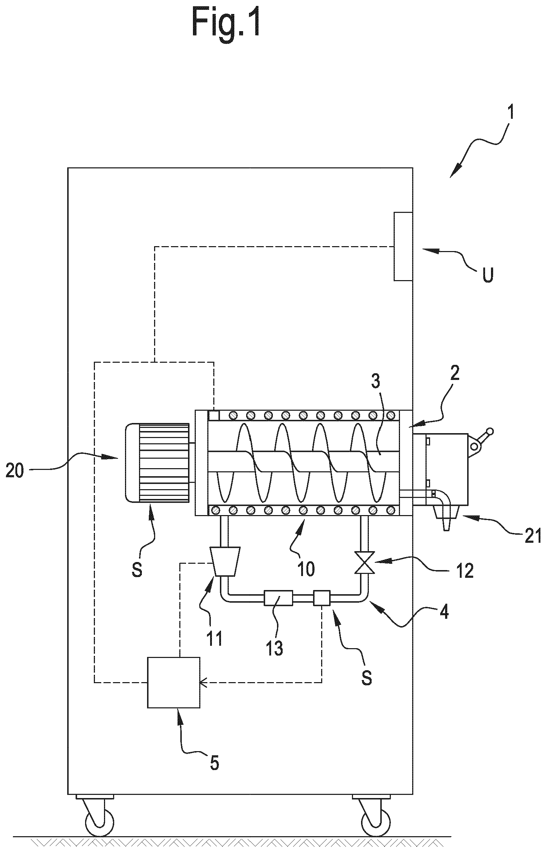

- Figure 1 schematically illustrates a machine for making liquid, semiliquid or semisolid products according to this invention;

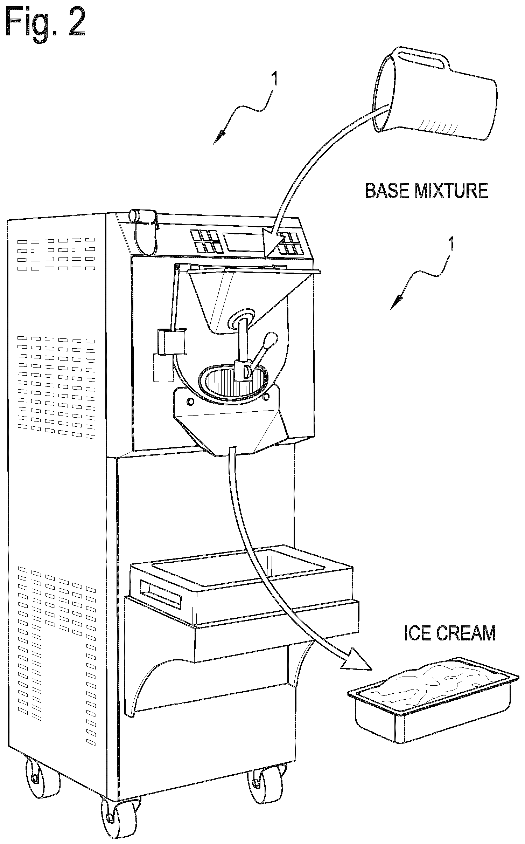

- Figure 2 schematically illustrates a machine for making liquid, semiliquid or semisolid products according to this invention;

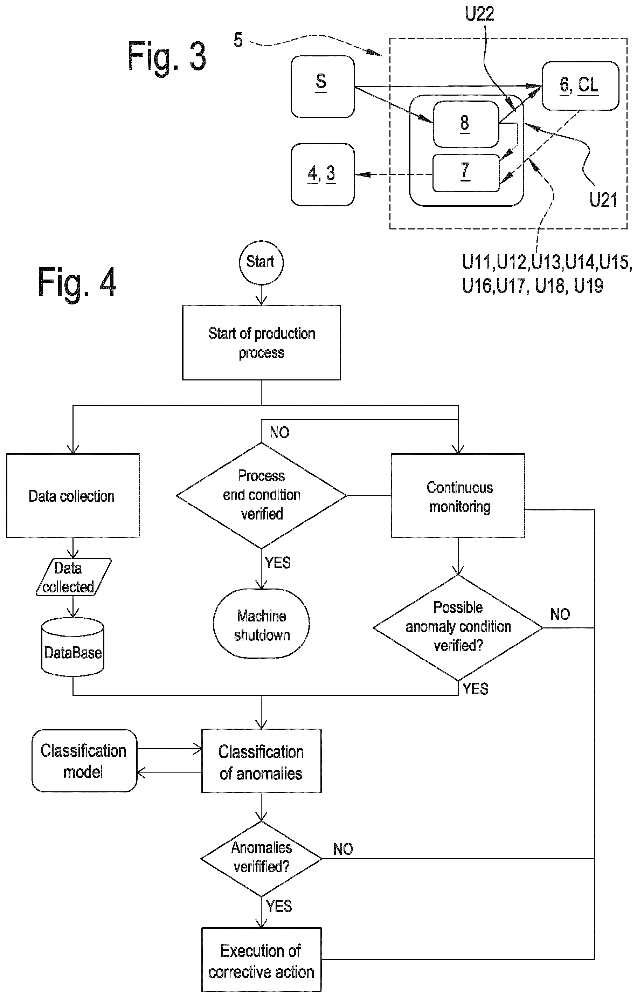

- Figure 3 schematically illustrates details of the control unit of the machine of Figure 1;
- Figure 4 schematically represents a control flow implemented by the control unit of the machine of Figure 1;
- Figure 5 schematically represents the architecture of a control module of the machine 1 of this invention in an embodiment comprising a neural network;
- Figure 6 schematically shows the composition of some of the mixtures used during the step of training;
- Figures 7 to 9 schematically represent the trend of some of the parameters during a processing cycle in a machine of this invention during a step of training, hence when the control module is not yet trained;
- Figure 10 schematically represents a processing cycle in a machine of this invention during a step of training, hence when the control module is not yet trained. Defined according to the invention is a machine 1 for making liquid or semiliquid or semisolid food products.

It should be noted that the machine 1 allows making mainly ice cream and cold dessert products.

More preferably, the machine 1 allows making ice cream, both artisanal gelato and/or soft serve ice cream, sorbets, creams and granitas.

The machine 1 according to the invention is defined in appended claim 1 and, *inter alia,* comprises:
- a processing container 2 for processing base products;
- a stirrer 3 which is adapted to mix products inside the base product processing container 2 and which rotates inside the processing container 2;
- a thermal treatment system 4 configured to thermally treat the products inside the container 2;
- a control unit 5, connected to the thermal treatment system 4 and to the stirrer 3 to drive them;
- at least one sensor S, configured to detect an operating parameter of the machine and/or a state of a part thereof.

According to the invention, the control unit 5 comprises:
- a first artificial intelligence control module 6, configured to define a pre-trained classifier CL having at least one input (I1, I2, I3, I4, I5, I6, I7) and at least one output U11, where the at least one input I1 is connected to the sensor S;
- a drive module 7 connected to the output U11 of the first control module 6 and at least to the thermal treatment system 4 and/or to the stirrer 3 to regulate at least one operating parameter relating to the thermal treatment system 4 and/or to the stirrer 3 as a function of the value of the at least one output U11 of the first control module 6.

According to an aspect, the first control module 6 comprises a plurality of inputs (I1, I2, I3, I4, I5, I6, I7).

According to yet another aspect, the at least one output U11 of the first control module 6 represents a classification of a mixture of the base products.

Basically, the first control module 6 is configured to classify the mixture.

It should be noted that in an embodiment, the first control module 6 comprises a classifier CL based on machine learning (artificial intelligence) solutions.

It should be noted that in an embodiment, the first control module 6 comprises a neural network RN comprising a plurality of layers (S1, S2, S3, S4, S5, S6) and having a plurality of inputs (I1, I2, I3, I4, I5, I6, I7).

Described in detail below, without losing in generality, is the embodiment in which the first control module 6 comprises a neural network RN.

However, other embodiments that do not have a neural network RN as the first control module 6 are also described below.

Preferably, according to another aspect, the machine 1 comprises a dispenser 21 connected to the first container 2 to dispense the product.

According to another aspect, the machine 1 preferably comprises an interface U, connected to the control unit 5, to allow the user to send commands/settings to the control unit 5.

Preferably, the machine 1 comprises an electric motor 20, connected to the stirrer 3 to drive it in rotation.

Preferably, the neural network RN comprises at least two hidden layers with a number of neurons preferably greater than 10 (preferably with ReLU or tanh hyperbolic tangent or LeakyReLU activating function).

Preferably, the last layer of neurons S6, that is, the one at the output of the neural network RN has a sigmoid activation function (in the case of two classes) or softmax activation function (in the case of three or more classes).

With reference to the activation function of the neurons making up the different layers (S1, S2, S3, S4, S5, S6), it is noted that these activation functions may be of the following types:
- Sigmoid (compresses input values between 0 and 1);
- ReLU (rectified linear unit), which is a linear activation function defined as f(x) = max(0,x);
- Softmax (used preferably in the output state: the sum of the outputs is 1; it advantageously allows representing a probability distribution);
- Tanh (hyperbolic tangent, has the shape of an S curve like the sigmoid function but compresses input values between -1 and 1; it is commonly used often in hidden layers).

It should be noted that the container 2 and the stirrer 3 together define a batch freezing unit.

The neural network RN is, as is known, a computing model whose purpose is to determine output values based on input values.

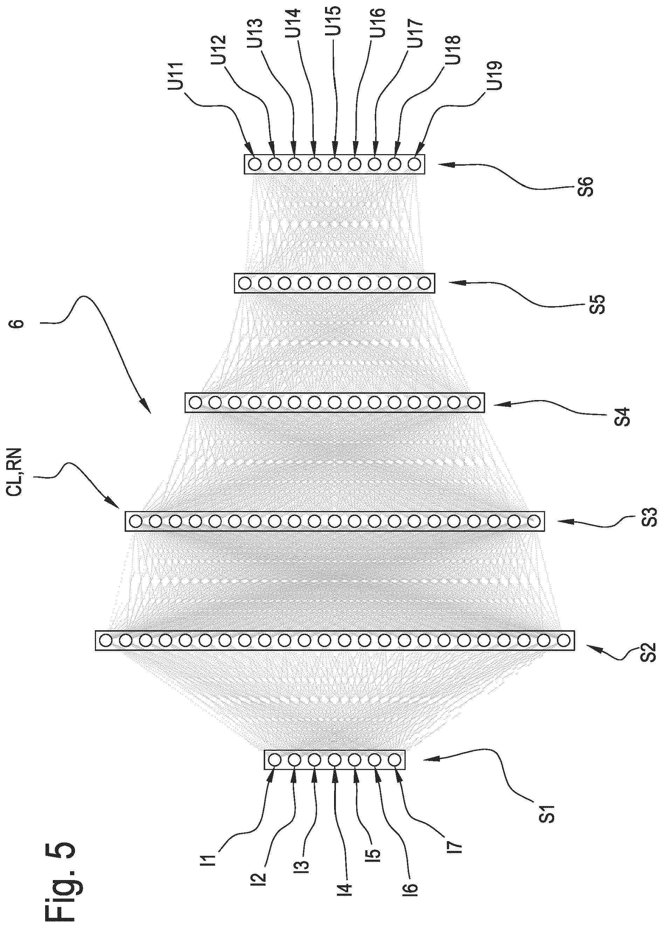

The neural network RN is composed of several layers of neurons (in the example of Figure 5, there are six layers: S1, S2, S3, S4, S5, S6; it is understood that the number of layers may be more or less than those illustrated), where each performs a weighted sum operation with inputs and passes the result to an activation function which serves to keep it within a certain range and to approximate it.

According to an aspect, the neurons of the hidden layers will pass their result on to those of the next layer.

Said result will be given by the linear combination (with its activation) of the outputs of the last hidden layer.

According to an aspect, at least some of the neural network layers S2, S3, S4, S5 are hidden layers and the neural network is a deep neural network. According to another aspect, the neural network RN is a recurrent neural network (RNN).

According to yet another aspect, the neural network RN is a convolutional neural network (CNN).

Alternatively, the neural network RN is any variant of the RNN and CNN type or any hybrid version given by the combination of RNN and CNN and variants thereof.

According to yet another aspect, the neural network RN is assisted by components which implement what is known as "attention", according to the known transformer architecture.

It should be noted that in this case, the first control module 6 comprises a neural network RN and other artificial intelligence sub-modules configured to implement what is known as "attention", according to the known transformer architecture.

In experimental tests conducted by the applicant on the machine 1, using a neural network RN, the best results in terms of performance were observed with a network of the CNN type.

The structure of the neural network RN, schematically illustrated in Figure 5, in particular with regard to its inputs and outputs, is better described below.

It should be noted that the number of neurons per layer, as well as the number of layers, may be variable, without thereby departing from the scope of the inventive concept.

Preferably, the network comprises more than four layers.

With our focus on the architecture of the control unit 5, the following should be noted.

According to an aspect, the machine 1 comprises an additional, second control module 8 configured to perform processes and/or detect anomalies based on the data of the at least one sensor S.

The second module 8 may also be used with a first control module 6 of a different kind, that is to say, with a first artificial intelligence control module 6 that does not comprise only one neural network. Thus, what is described with reference to the second module 8 applies expressly also to a first artificial intelligence control module 6 that does not comprise only one neural network.

The second module 8 thus receives data from the at least one sensor S. The second control module 8 has at least a first output U21 connected to the drive module 7, so as to be able to transmit control information to the drive module 7.

The control information is information derived by the second control module 8 based on the data supplied by the at least one sensor S as input to the second control module 8.

Furthermore, according to another aspect, the drive module 7 is configured to regulate at least one operating parameter relating to the thermal treatment system 4 and/or to the stirrer 3 as a function of the value of the at least one output U11 of the first control module 6 and/or of the value of the output U21 of the second control module 8.

This concept is explained in more detail below.

Basically, the drive module 7 can operate in two different modes, that is to say, it can regulate at least one operating parameter relating to the thermal treatment system 4 and/or to the stirrer 3 as a function of:
1) Only the value of the output U11 of the first control module 6;
2) Both values of the outputs (U11, U21) of the first control module 6 and of the second control module 8.

Obviously, the invention involves using the first control module 6; the value of only the output U21 of the second control module 8 for the drive module 7 may be used in certain special cases, and only at an initial stage, for the reasons that are better explained below.

It should be noted, therefore, that during normal machine operation, there may be times where the drive module 7 drives the thermal treatment system 4 and/or the stirrer 3 based on one output only (U11 or U21) or on both.

It should also be noted that the values of the output U11 of the first control module 6 and the output U21 of the second control module 8 already take into account (that is, are a function of) the value of the signal of the at least one sensor S.

It should be noted that the term "output" is used in this disclosure to mean a software variable or parameter which provides a (numeric and/or alphanumeric) value.

In effect, the control unit 5 comprises hardware and software elements defining the aforementioned modules (6, 7 and 8).

According to another aspect, the second control module 8 comprises a second output U22, connected to one I2 of the inputs of a first layer of the layers S1, S2, S3, S4, S5, S6 of neural networks RN to transmit control information to the first, neural network control module 6.

Basically, according to this aspect, the second control module 8 is coupled to the first control module 6 to exchange information therewith.

In particular, the output U22 of the second control module 8 constitutes an input I2 of the first control module 6.

With specific reference to the case where the first control module 6 is a neural network RN, it should be noted that the output U22 of the second control module 8 constitutes an input I2 of the first layer S1 of the layers S1, S2, S3, S4, S5, S6 of neural networks RN.

According to the invention, the at least one sensor S is configured to detect a value relating to the power supply of a drive motor 20 connected to the stirrer 3 to drive it in rotation.

In other words, the sensor S can detect a current and/or voltage and/or power value of the motor 20 that drives the stirrer 3.

The sensor S may be of any kind provided it is compatible and capable of detecting one or more between the current and/or voltage and/or power of the motor 20 that drives the stirrer 3.

It may also be integrated in an additional control and drive unit (driver) of the drive motor of the stirrer 3.

According to the invention, the second control module 8 is configured to derive, from the value relating to the power supply of a motor 20 that drives the stirrer 3, a parameter associated with the consistency and/or viscosity of the product being processed in the container 2.

According to the invention, the parameter associated with the consistency and/or viscosity of the product being processed in the container 2 is included between a minimum value, corresponding to a product to be processed, and a maximum value, corresponding to a finished product.

Preferably, the parameter associated with the consistency and/or viscosity of the product being processed in the container 2 is a value between 0 and 100, where 0 corresponds to the product at the start of the cycle, that is, when the base ingredients have not yet been batch frozen, and 100 corresponds to the finished ice cream product at the end of the process.

According to yet another aspect, the drive module 7 is configured to regulate the at least one operating parameter relating to the thermal treatment system 4 and/or to the stirrer 3 as a function of only the value of the output U21 of the second control module 8 for a preset length of time at the start of the processing cycle.

Basically, according to this aspect, for a preset length of time (preferably less than 30 seconds) at the start of the processing cycle, the drive module 7 is active only on the basis of the value of the output U21 of the second control module 8.

Advantageously, the fact that only the value of the output U21 of the second control module 8 is used as basis for the drive module 7 allows capturing a plurality of samples of the signal of the sensor S, which will, together with other information, constitute the values for the inputs of the neural network RN; only at that point, when a plurality of input values has been sampled, will it be possible to use the first control module 6 (by itself or in combination with the second module 8) to send control information to the drive module 7.

In effect, it should be noted that the first control module 6 needs to have, as input, a certain number of values captured at different times, to be able to calculate a value for the at least one output U11.

Basically, when a sufficient, predetermined amount of information (i.e. number of data samples) is statistically available, it is possible to provide the control module 6 with input data, so as to be able to calculate the at least one output U11 (so the drive module 7 can use the output U11 to allow regulating the thermal treatment system 4 and/or the stirrer 3 when and if necessary).

With reference to this aspect, attention is drawn to the following.

It should be noted that the first control module 6 preferably allows performing a quick classification by iterative refinement. In other words, an early classification based on different time intervals is performed, without waiting for the end of the processing cycle (unlike what is performed by most prior art classifiers) and the first control module 6 is able to perform the classification at different time intervals, with the number of data samples captured by the sensor S progressively increasing in number. This has the advantage of an initial classification to be performed at the start of batch freezing process, giving the machine much leeway to correct possible mixture imbalances, for example by implementing slower but more "robust" production processes.

Basically, as more and more time passes after the start of the process, hence with an increasing number of data samples captured by the sensor S and applied as input, the first control module 6 is able to increase its classification reliability; however, it is active substantially almost immediately after the cycle starts and does not need to wait for the end of the cycle.

According to another aspect, the thermal treatment system 4 is a thermodynamic system.

Preferably, the thermal treatment system 4 is a system of the thermodynamic type.

In other words, the thermal treatment system 4 comprises a circuit that uses a heat exchanger fluid and includes: an evaporator 10, a compressor 11, a throttle element 12 and a condenser 13.

Preferably, the circuit implements a thermodynamic, vapour compression cycle.

The heat exchanger fluid is a refrigerating fluid.

According to another aspect, the drive module 7 is configured to regulate one or more of the following operating parameters:
- the drive power of the compressor 11;
- the degree of opening of the throttle element 12;
- the rotation speed of the stirrer 3;
- the process cycle time (that is, the instant at which the process cycle stops).

It should be noted that according to the architecture described above, the cycle which can be set up to control the machine 1, allows using as input for the drive module 7 the output of the first, neural network control module 6. As better clarified below, when the specific mode of training the neural network is described, it is advantageously possible to train the machine 1 in such a way as to complete an ice cream production cycle effectively even with mixtures that are not perfectly balanced, that is, with one more ingredients present in a proportion that deviates from the optimum (theoretical) proportion.

According to an aspect, the at least one sensor S is configured to detect at least one of the following parameters:
- an operating pressure of the heat exchanger fluid at a predetermined point in the circuit of the thermal treatment system 4;
- an operating temperature of the heat exchanger fluid at a predetermined point in the circuit of the thermal treatment system 4;
- an operating temperature of the container 2;
- an operating temperature of the heat exchanger fluid flowing out of the evaporator 10 associated with the container 2;
- an operating temperature of the heat exchanger fluid flowing into the evaporator 10 associated with the container 2;
- an operating pressure of the heat exchanger fluid flowing out of the compressor 11;
- an operating pressure of the heat exchanger fluid flowing out of the evaporator 10;
- a process cycle time;
- a temperature of the ambient air in the proximity of the machine 1.

It should be noted, more generally speaking, that the machine 1 may be equipped with a plurality of sensors S, each configured to detect a parameter from among those mentioned previously.

In particular, therefore, the machine 1 may comprise a pressure sensor S, configured to detect an operating pressure of the heat exchanger fluid at a predetermined point in the circuit of the thermal treatment system 4.

According to another aspect, the machine 1 may comprise a temperature sensor S, configured to detect an operating temperature of the heat exchanger fluid at a predetermined point in the circuit of the thermal treatment system 4.

According to yet another aspect, the machine 1 may comprise a sensor S configured to detect the operating temperature of the heat exchanger fluid flowing out of the evaporator 10 (where the evaporator 10 is associated with the container).

According to yet another aspect, the machine 1 may comprise a sensor S configured to detect the operating temperature of the container 2.

According to yet another aspect, the machine 1 may comprise a sensor S configured to detect the operating temperature of the heat exchanger fluid flowing out of the evaporator 10, associated with the container 2.

According to yet another aspect, the machine 1 may comprise a sensor S configured to detect the operating temperature of the heat exchanger fluid flowing into the evaporator 10 (where the evaporator 10 is associated with the container 2).

According to yet another aspect, the machine 1 may comprise a sensor S configured to detect an operating pressure of the heat exchanger fluid flowing out of the compressor 11.

According to yet another aspect, the machine 1 may comprise a sensor S configured to detect an operating pressure of the heat exchanger fluid flowing out of the evaporator 10.

According to another aspect, the machine 1 may comprise a sensor S configured to detect a process cycle time (this type of sensor might also be a software variable of the control unit 5).

According to yet another aspect, the at least one sensor S is configured to detect a value of acceleration of least one part of the machine.

According to another aspect, the inputs I1, I2, I3, I4, I5, I6, I7 comprise one or more of the following inputs:
- a first input (11) associated with (that is, representing) a value representing a consistency or viscosity of the product being processed in the container 2;
- a second input I2 associated with (that is, representing) a value representing an operating temperature of the container 2;
- a third input I3 associated with (that is, representing) a value representing an operating temperature of the heat exchanger fluid flowing into the evaporator 10 associated with the container 2;
- a fourth input I4 associated with (that is, representing) a value representing an operating temperature of the heat exchanger fluid flowing out of the evaporator 10 associated with the container 2;
- a fifth input I5 associated with (that is, representing) a value representing an operating pressure of the heat exchanger fluid flowing out of the compressor 11;
- a sixth input I6 associated with (that is, representing) a value representing an operating pressure of the heat exchanger fluid flowing out of the evaporator 10;
- a seventh input I7 associated with (that is, representing) a value representing a degree of opening of the throttle element 12.

In the case where the first module 6 comprises a neural network RN, these inputs are the inputs of a first layer of the layers S1, S2, S3, S4, S5, S6 of neural networks RN.

It should be noted that these inputs I1, I2, I3, I4, I5, I6, I7 were selected because they were considered the most significant parameters for controlling and monitoring the process cycle for the ice cream trade, that is to say, for a machine 1 suitable for making ice cream.

It is understood that this description covers embodiments in which the machine 1 has a neural network RN with only one input I1, or n from two to seven of the inputs mentioned above, selected in any manner.

In particular, it is stressed that of the inputs I1, I2, I3, I4, I5, I6, I7 mentioned above, those that have the most importance or weight (that is, influence) in determining the at least one output U11 of the first control module 6 (determined on the basis of the training tests conducted) would seem to be the first input I1 and also the sixth input I6.

According to another aspect, the first control module 6 is configured to classify the mixture based on the balance of the ingredients of the mixture being processed in the container 2, the at least one output U11 of the first control module 6 representing the classification of the mixture being processed in the container 2.

In other words, according to this aspect, the at least one output U11 represents a probability that the mixture being processed is balanced with respect to one or more of the base ingredients or the base ingredients in their entirety.

As is known, to obtain an ice cream of optimum quality, balanced ingredients are fundamental. Information as to whether the ingredients are balanced (or not) is therefore fundamental to be able to take corrective action when necessary (that is, to control the thermal treatment system 4 or the stirrer 3 accordingly) so that the base mixture can be processed in the optimum manner.

Advantageously, according to another aspect, classifying the type of unbalanced mixture becomes fundamental to be able to identify the optimum freezing point, thus increasing the probability of being able to complete the batch freezing process.

In the first place, for the operation of the control unit, it is sufficient to see whether the mixture being processed is balanced or unbalanced with respect to one or more of the base ingredients or the base ingredients in their entirety.

According to another aspect, the first control module 6 is configured to perform a multiclass classification of the mixture based on the balance of the ingredients in the mixture being processed in the container 2.

According to this aspect, the first control module 6 comprises a plurality of outputs U11, U12, U13, U14, U15, U16, U17, U18, U19.

According to this aspect, in the case where the first control module 6 comprises a neural network RN, the last of the layers S1, S2, S3, S4, S5, S6 of neural networks RN comprises a plurality of outputs U11, U12, U13, U14, U15, U16, U17, U18, U19.

Each output U11, U12, U13, U14, U15, U16, U17, U18, U19. is associated with (that is, represents) a mixture class in which the base ingredients are balanced or unbalanced in a predetermined manner.

In a basic embodiment, the first control module 6 has only one output U11, which represents the degree to which one or the entirety of the base ingredients are balanced, or unbalanced.

More precisely, each output U11, U12, U13, U14, U15, U16, U17, U18, U19 provides a numeric value between a minimum value and a maximum value (preferably between 0 and 1), representing the probability that the product being processed in the container 2 corresponds to the preset class.

According to an aspect, in their entirety, the aforesaid outputs U11, U12, U13, U14, U15, U16, U17, U18, U19 of the first control module 6 are associated with (that is, they represent) two or more of the following classes of mixture being processed:
- product being processed in the container 2 is balanced with respect to at least one base ingredient;
- product being processed in the container 2 is unbalanced with respect to the water ingredient;
- product being processed in the container 2 is unbalanced with respect to the fats;
- product being processed in the container 2 is unbalanced with respect to sugar.

According to a specific embodiment, in their entirety, the aforesaid outputs U11, U12, U13, U14, U15, U16, U17, U18, U19 of the first control module 6 are associated with (that is, they represent) two or more of the following classes of mixture being processed:
- product being processed in the container 2 is balanced with respect to at least one base ingredient;
- product being processed in the container 2 is unbalanced with respect to the water ingredient;
- product being processed in the container 2 is unbalanced due to an excess of fats;
- product being processed in the container 2 is unbalanced due to a deficiency of fats;
- product being processed in the container 2 is unbalanced due to deficiency of sugar;
- product being processed in the container 2 is unbalanced due to an excess of sugar.

According to an aspect, the control unit 5 is configured to transmit the data to the at least one I1 of the inputs of the first control module 6 at preset time intervals of preferably less than 30 seconds (still more preferably, less than 15 seconds, or advantageously less than 5 seconds).

The above was a description of the structure of the control unit 5, with reference in particular to the first control module 6.

Now described below is the procedure for training the neural network RN, that is to say, how the neural network described above was trained.

It should be considered that the following is applicable to the training of the first control module 6 which comprises a neural network RN, although some aspects of the procedure described, particularly with regard to the types of mixture used, are also applicable to control modules 6 comprising an artificial intelligence classifier CL of another kind.

Training the neural network RN means finding the weights for the activation function to give the best possible performance.

Generally speaking, training a neural network involves adjusting the weights of the neuron-to-neuron connections to minimize the predictive error of the neural network model.

As is known, the process for training a neural network, occurs in several steps:
- 1) Weight initialization: the weights of the neuron-to-neuron connections are initialized with random values;
- 2) Feedforward: the input is presented to the neural network, which processes it by passing through the different neuron layers, each of which an activation function to its weighted inputs.
- 3) Error calculation: the error is calculated by comparing the output produced by the neural network with the expected value.
- 4) Backpropagation: the error is reverse propagated through the neural network, modifying the weights of the neuron-to-neuron connections in order to reduce the error.

Steps 2 to 4 are repeated for a fixed number of times or until the error reaches a predetermined, acceptable value.

Preferably, after being trained, the neural network RN is validated on an additional dataset (test data) to assess its performance on new data.

To train the neural network RN, the machine 1 was made to work, that is, to perform the processing cycle with mixtures of different kinds loaded in the container 2, as described in more detail below, balanced to different extents, that is to say, with different classifications with regard to the balance of the ingredients.

With reference, for example, to one type of mixture, whether balanced or unbalanced with respect to its base ingredients, a plurality of tests were carried out (preferably more than 5 for each type of mixture) and during training, probability 1 was assigned at the output relating to the desired class of that mixture, and probability 0 at the outputs relating to the classes of the other mixtures.

The mixtures used for training were the following (considering that for each type of mixture, several batches were used, so as to train the machine 1 with respect to minor variations in the composition of the mixture):
- Balanced mixture;
- Unbalanced mixture with an excess of fats;
- Unbalanced mixture with an excess of sugar (sucrose);
- Unbalanced mixture with a deficiency of sugar (sucrose);
- Unbalanced mixture with an excess of water.

More precisely, the following 9 mixtures were used for training:
- Balanced mixture;
- Unbalanced mixture with an excess of fats (preferably cream) by a first predetermined percentage (corresponding preferably to 3 times the optimum balance);
- Unbalanced mixture with an excess of fats (preferably cream) by a second predetermined percentage (corresponding preferably to 4.4 times the optimum balance);
- Unbalanced mixture with an excess of sugar (sucrose) by a first predetermined percentage (corresponding preferably to + 1/3 of the optimum balance);
- Unbalanced mixture with an excess of sugar (sucrose) by a second predetermined percentage (corresponding preferably to + 2/3 of the optimum balance);
- Unbalanced mixture with an excess of sugar (sucrose) by a third predetermined percentage (corresponding preferably to 100% of the optimum balance);
- Unbalanced mixture with a deficiency of sugar (sucrose) by a first predetermined percentage (corresponding preferably to - 1/3 of the optimum balance);
- Unbalanced mixture with a deficiency of sugar (sucrose) by a second predetermined percentage (corresponding preferably to - 2/3 of the optimum balance);
- Unbalanced mixture with an excess of water (corresponding, preferably, to +10% compared to the optimum balance).

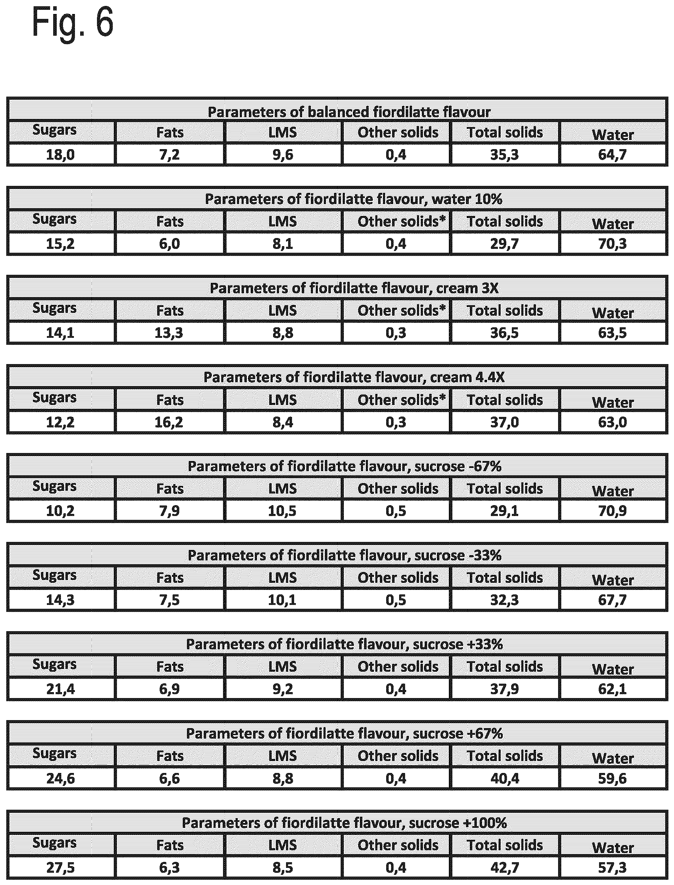

Figure 6, for example, shows the composition of the test mixture (in percentage terms) of the following mixtures respectively:
- balanced (row one),
- unbalanced with an excess of water (row two),
- unbalanced with an excess of fats (cream) being three times more than in the optimum balance (row three),
- unbalanced with an excess of fats (cream) being 4.4 times more than in the optimum balance (row four),
- unbalanced with a deficiency of sugar (sucrose) being 2/3 less than in the optimum balance (row five),
- unbalanced with a deficiency of sugar (sucrose) being 1/3 less than in the optimum balance (row six),
- unbalanced with an excess of sugar (sucrose) being 1/3 more than in the optimum balance (row seven),
- unbalanced with an excess of sugar (sucrose) being 2/3 more than in the optimum balance (row eight),
- unbalanced with an excess of sugar (sucrose) being 100% more than in the optimum balance (row nine).

The acronym "LMS" means lean milk solids.

It should be noted that greater precision could be obtained by using more mixtures, for example more than one unbalanced mixture with an excess of water, and/or unbalanced mixtures deficient in fats.

As can be easily understood, the test mixture was loaded into the container 2 and the machine 1 was started so as to run an ice cream production cycle on the test mixture.

During this cycle, therefore, the neural network RN received the values from the sensors S as input, that is, at its inputs as described above and the label corresponding to the correct classification of the mixture being processed in the container 2 was set at the output of the neural network RN.

It should be noted that the neural network RN is, practically speaking, configured to act as a classifier.

Preferably, training is carried out in a number of epochs of between 100 and 600 and, still more preferably, less than 250 epochs.

Preferably, training is carried out via an Adam optimizer.

Still more preferably, training is carried out with batches of 12 samples each. In the tests that were conducted, it was observed that sugar has the effect of lowering the freezing point of the mixture being processed.

Consequently, a mixture that is only lightly sweetened (low in sugar) will tend to freeze more quickly, with the risk of forming blocks of ice before reaching the desired consistency, while a mixture that is very sugary will tend to remain more liquid because it freezes at a lower temperature.

As described in more detail below, it should be noted that understanding the type of mixture, in particular the sugar balance, through classification of the mixture via the first control module 6, thus allows implementing actions aimed to completing the batch freezing cycle in optimum manner as a function of the type of product being processed.

In effect, as set out above, in the case of sugar, for example, understanding through the first module 6 whether the mixture is unbalanced (preferably but not necessarily with an excess or a deficiency) allows suitable corrective actions to be put in place.

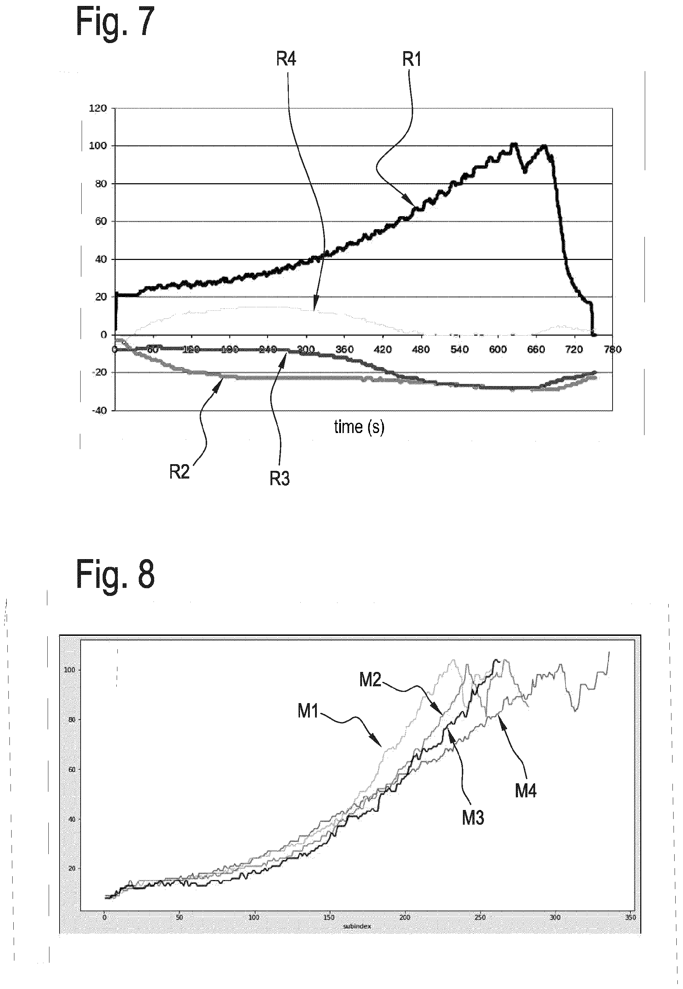

Figure 7 shows the trend of some parameters captured by sensors S in a production process with a balanced mixture.

More precisely, in the graph shown in Figure 7, R1 is the trend over time (x-axis) of a parameter associated with the consistency and/or viscosity of the product being processed in the container 2 derived from a value relating to the power supply of a motor of the stirrer 3; this parameter is represented by the values on the y-axis and varies from 0 to 100.

In Figure 7, R2 indicates the temperature on the inlet side of the evaporator 10, R3 indicates the temperature on the outlet side of the evaporator 10, while R4 indicates the difference between these two temperatures.

As may be inferred from the graph, the parameter associated with the consistency and/or viscosity of the product being processed in the container 2 tends to increase during processing, until it reaches a maximum value (corresponding to 100) when the product is ready.

The experiments showed that the parameter associated with the consistency and/or viscosity of the product being processed in the container 2 has a different trend as a function of the type of mixture with respect to the balance of one or more ingredients or as a function of anomalies that may occur during processing (for example, a frozen block).

With reference to Figure 8, derived, during supervised training, by sampling the trend of the parameter associated with the consistency and/or viscosity of the product being processed in the container 2 for different mixtures, it is noted that
- the mixture M1 is unbalanced with 3X the amount of cream;
- the mixture M2 is unbalanced with 4.4X the amount of cream;
- the mixture M3 is unbalanced with 10% water;
- the mixture M4 is balanced.

As may be observed, for different types of mixture in terms of balance, the parameter associated with the consistency and/or viscosity of the product being processed in the container 2 reaches a consistency corresponding to the finished product (that is, substantially equal to 100) at different times. As may be noted, the unbalanced mixtures (M1, M2, M3) reach a maximum consistency in less time than the balanced mixture (M4).

As may be easily understood from this example, therefore, knowing the classification of the mixture via the control module 6, allows the drive module 7 to control the machine in optimum manner to allow concluding the batch freezing cycle with a top quality product, irrespective of the balance of ingredients, based on the output of the first control module 6 (classification of the mixture) combined with that of the second control module 8 (value of the parameter associated with the consistency and/or viscosity of the product).

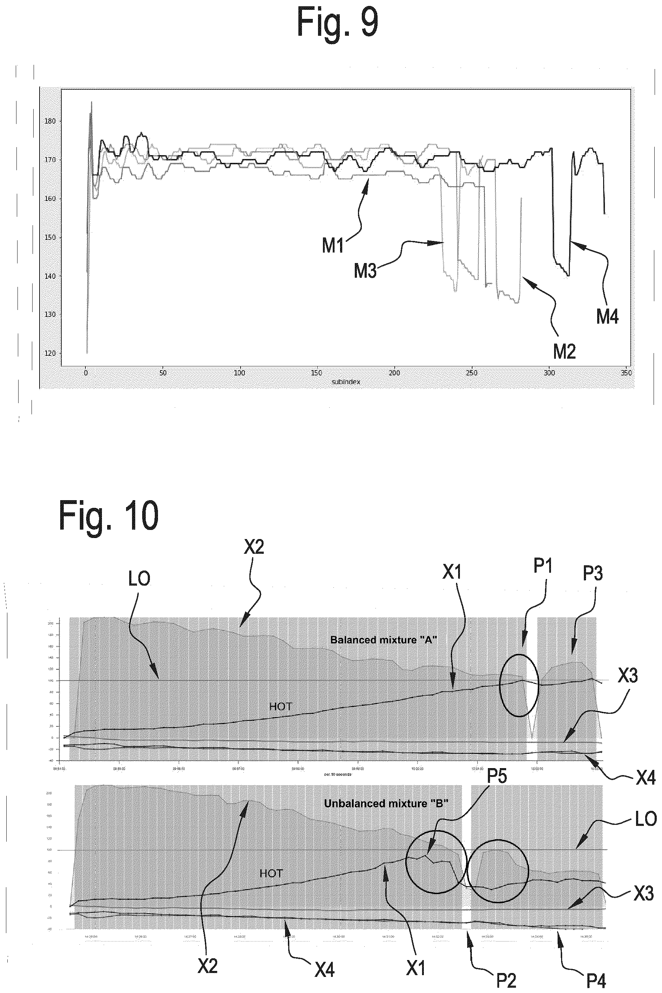

With reference to Figure 9, derived, during supervised training, by sampling the trend of the value of the pressure of the heat exchanger fluid of the thermodynamic system 4, downstream of the compressor 11, it may be observed that:
- the mixture M1 is unbalanced with 3X the amount of cream;
- the mixture M2 is unbalanced with 4.4X the amount of cream;
- the mixture M3 is unbalanced with 10% water;
- the mixture M4 is balanced.

It is evident from Figure 9, that the pressure of the heat exchanger fluid of the thermodynamic system 4, downstream of the compressor, is different, along the cycle, for the different mixtures.

For the first control module 6, therefore, this input constitutes a value which is reliably usable for the purposes of classification.

This graph also shows that with the mixture M3, which is unbalanced with respect to water, the pressure during the processing cycle is lower than it is with the balanced mixture M4.

Figure 10 shows an unbalanced mixture ("B") in comparison to a balanced mixture ("A"):
- the curve X1 expresses the consistency or viscosity of the mixture, measured over time;
- the curve X2 expresses the degree of opening of the throttle element 12;
- the curve X3 expresses the temperature of the heat exchanger fluid flowing out of the evaporator 10 of the thermodynamic system 4;
- the curve X4 expresses the temperature of the heat exchanger fluid flowing into the evaporator 10 of the thermodynamic system 4.

In Figure 10, the zones labelled P1 and P2 correspond to the shutting down of the compressor 11, corresponding to the end of the batch freezing cycle. It should be noted that if the ice cream is not taken out of the container 2 while the compressor 11 is shut down, the machine 1 restarts the compressor 11 and the stirrer 3 (zones P3 and P4, not relevant hereto) in order to keep the ice cream at a predetermined temperature.

It should be noted that Figure 10 corresponds to a test performed on a machine 1 during training of the first, neural network control module 6.

With reference to the unbalanced mixture "B" and to the line LO, representing the optimum consistency, it is noted that the consistency curve X1, that is, the viscosity of the mixture, does not reach the optimum consistency LO and the ice cream produced is therefore sub-optimum quality.

In such a case, the presence of the special control cycle with the first control module 6 would, in the case of an unbalanced mixture "B", have allowed the drive module 7 to stop the process cycle at the point P5, corresponding certainly to a firmer consistency than that at point P2.

The above is clear evidence of the enhancements in technical performance made possible by the machine 1 of the invention.

Described below by way of non-limiting example are the control actions that will be implemented through the drive module 7.

First of all, it is specified that the expression *"to regulate at least one operating parameter relating to the thermal treatment system (4) and*/*or to the stirrer (3)"* is used to mean that the drive module 7 operates on the thermal treatment system 4 and/or on the stirrer 3 (in particular, on the electric motor coupled to the stirrer 3) to control their functions.

It should be noted that the drive module 7 can also operate on other parts of the machine 1.

It should also be noted that, advantageously, the drive module 7 can operate on one or more of the following parts of the thermal treatment system 4: the compressor 11 and/or the throttle element 12 and/or the parts which act on the condenser 13 (cooling fan and/or cooling water pump).

Described below are some cases that may arise during the operation of the machine 1 as a result of the composition of the mixture and/or particular process conditions.

Under these circumstances, the way the control unit 5 adjusts the operating parameter relating to the thermal treatment system 4 and/or the stirrer 3 will be described.

Certain conditions during processing could give rise to a block of frozen ice cream in the middle of the stirrer 3.

The control module 8 may be configured to detect a potential anomaly of this kind, that is to say, an anomaly involving a block of frozen ice cream in the middle of the stirrer 3, by one or more of the following sensor signals:
- decrease in the value associated with the consistency of the product;
- and/or an increase in the overheating at the suction end of the refrigeration compressor.

Under these circumstances, if the first control module 6 classifies the mixture as an unbalanced mixture (if the classification is multiclass, preferably unbalanced with an excess of fats), the drive module 7 may be configured to command one or more of the following actions (to enable the batch freezing cycle to be completed in an optimum manner):
- increasing the opening of the pressure reducing element (throttle valve) so as to reduce overheating at the inlet of the compressor 11;
- driving the motor of the stirrer 3 intermittently, preferably in pulsed mode (preferably at high speed);
- reversing the rotation direction of the motor of the stirrer 3.

Advantageously, thanks to these actions, the processing cycle can be completed. It should be noted that the fact the first control module 6 has classified the mixture as an unbalanced mixture advantageously confirms the anomaly detected by the drive module 7: indeed, experiments have shown that the block of frozen ice cream in the middle generally tends to form when the mixture is unbalanced.

That way, the corrective action taken allows the processing cycle to be effectively completed, thus producing an optimum quality product whether the base ingredients are balanced or not.

In another example, a layer of ice may, under certain conditions, form on the inside wall of the container 2.

The control module 8 may be configured to detect a potential anomaly of this kind, that is to say, an anomaly involving a layer of ice on the inside wall of the container 2, by one or more of the following sensor signals:
- alteration of the temperatures at inlet and outlet of the evaporator 10 (that is, the values are different from the expected or desired or previous values).

Under these circumstances, if the first control module 6 classifies the mixture as an unbalanced mixture (if the classification is multiclass, preferably unbalanced with a deficiency of sugars and/or fats), the drive module 7 may be configured to command one or more of the following actions (to enable the batch freezing cycle to be completed in an optimum manner):
- adjusting (reducing) the drive power of the compressor 11;
- activating a mode of injecting hot gas into the evaporator 10, that is to say, of heating the evaporator 10.

It should be noted that in order to inject hot gas into the evaporator 10 to heat the evaporator 10, that is to say, to make the evaporator 10 operate for a certain length of time as an exchanger that delivers heat (heats) instead of absorbing it (cooling), the thermal treatment system 4 must be configured to enable the evaporator 10 to work in two alternative modes:
- (1) a configuration known as a hot gas cycle (not illustrated because it is known to any person familiar with the trade)
- or (2) working like a heat pump (not illustrated because it is known to any person familiar with the trade).

In these configurations, the thermal treatment system 4 is provided with one or more valves which are operable by the control unit 5 to enable switching between a cooling mode of the evaporator 10 and a mode of operating by injection of hot gas, that is, heating the evaporator 10. In another example, the product, during processing, might reach an optimum consistency in too short a time compared to the expected, set time.

This generally means that the final temperature of the ice cream is not correct, that is to say, it is not as cold as a good quality ice cream is expected to be.

The control module 8 may be configured to detect a potential anomaly of this kind, that is to say, an anomaly involving a value of consistency reached in less time than a predetermined set time, by one or more of the following sensor signals:
- a product consistency signal (for example, detected indirectly via a power input value of the motor 20 of the stirrer 3) compared to a processing cycle start time;
- a temperature signal of the processing container 2, different from an expected time value or profile over time.

Under these circumstances, if the first control module 6 classifies the mixture as an unbalanced mixture (if the classification is multiclass, preferably unbalanced with a deficiency of sugars and/or an excess of fats), the drive module 7 may be configured to command one or more of the following actions (to enable the batch freezing cycle to be completed in an optimum manner):
- increasing the value of consistency associated with the product, corresponding to the end of the processing cycle (for example, to allow stopping at higher than standard levels of consistency values);
- increasing the opening of the throttle element 12 (which advantageously allows making the inside wall of the container 2 less cold and/or reducing the effort required of the stirrer 3 to scrape the ice off the surface of the inside wall of the container 2 which might have altered the consistency value);
   - decreasing the refrigerating power of the thermal system 4, in particular, reducing the power of the compressor 11.

In another example, the value detected in connection with product consistency, which as is known, is one of the main parameters affecting the quality of an ice cream product, might become lower while the product is being processed.

The control module 8 may be configured to detect a potential anomaly of this kind, that is to say, an anomaly involving a decrease in the consistency of the product compared to an expected value or an expected trend over the expected (set) time, by one or more of the following sensor signals:
- a signal relating to the input of power (voltage and/or current) of the motor 20 of the stirrer 3.

Under these circumstances, if the first control module 6 classifies the mixture as an unbalanced mixture, the drive module 7 may be configured to command one or more of the following actions (to enable the batch freezing cycle to be completed in an optimum manner):
- decreasing the refrigerating power of the thermal system 4, in particular, reducing the power of the compressor 11 ;
- injecting hot gas into the evaporator 10, that is to say, heating the evaporator 10.

As to the configuration of the thermal system 4 to enable hot gas to be injected into the evaporator 10, what is described above with reference to the block of frozen ice cream in the middle of the stirrer 3 also applies in this case.

In another example, the value detected in connection with product consistency, which as is known, is one of the main parameters affecting the quality of an ice cream product, might not vary over time while the product is being processed.

The control module 8 may be configured to detect a potential anomaly of this kind, that is to say, an anomaly involving an unvarying consistency of the product over time, compared to an expected value or an expected trend over the expected (set) time, by one or more of the following sensor signals:
- a signal relating to the input of power (voltage and/or current) of the motor of the stirrer 3;
- a temperature signal representing the temperature of the refrigerating fluid flowing into and/or out of the evaporator 10.

Under these circumstances, if the first control module 6 classifies the mixture as an unbalanced mixture, the drive module 7 may be configured to command one or more of the following actions (to enable the batch freezing cycle to be completed in an optimum manner):
- adjusting (reducing) the refrigerating power of the thermal system 4, in particular, reducing the power of the compressor 11;
- injecting hot gas into the evaporator 10.

As to the configuration of the thermal system 4 to enable hot gas to be injected into the evaporator 10, what is described above with reference to the block of frozen ice cream in the middle of the stirrer 3 also applies in this case.

In another example, the temperature of the heat exchanger fluid flowing out of the evaporator 10 might drop suddenly, that is to say, the value of the temperature of the heat exchanger fluid flowing out of the evaporator 10 might drop below a certain threshold in less than a preset time.

The control module 8 may be configured to detect a potential anomaly of this kind, that is to say, an anomaly involving
a drop in the temperature of the heat exchanger fluid flowing out of the evaporator 10 below a preset value in less than a preset time, by one or more of the following sensor signals:
- a signal relating to the input of power (voltage and/or current) of the motor of the stirrer 3.
- a temperature signal representing the temperature of the refrigerating fluid flowing into and/or out of the evaporator 10.

Under these circumstances, if the first control module 6 classifies the mixture as an unbalanced mixture, the drive module 7 may be configured to command one or more of the following actions (to enable the batch freezing cycle to be completed in an optimum manner):
- decreasing the refrigerating power of the thermal system 4, in particular, reducing the power of the compressor 11 ;
- injecting hot gas into the evaporator 10, that is to say, operating the evaporator 10 in heating mode.

As to the configuration of the thermal system 4 to enable hot gas to be injected into the evaporator 10, what is described above with reference to the block of frozen ice cream in the middle of the stirrer 3 also applies in this case.

In another example, processing might continue for too long a time.

The control module 8 may be configured to detect a potential anomaly of this kind, that is to say, an anomaly involving processing for a length of time greater than a set or expected length of time, by one or more of the following sensor signals:
- a processing time signal (obtainable, for example, via a timer of the machine 1);
- a signal representing the trend over time of the consistency of the product being processed in the container 2;
- a pressure value of the refrigerating fluid downstream of the compressor 11;
- a temperature signal representing the temperature of the air of the external environment in proximity to the machine 1;
- a temperature signal at the outlet of the compressor 11.

Under these circumstances, if the first control module 6 classifies the mixture as an unbalanced mixture (if the classification is multiclass, in particular, unbalanced with an excess of fats or sugars), the drive module 7 may be configured to command one or more of the following actions (to enable the batch freezing cycle to be completed in an optimum manner):
- adjusting (increasing) the refrigerating power of the thermal system 4, in particular, increasing the power of the compressor 11;
- adjusting (increasing) the flow rate of the cooling air towards the condenser 13, for air condensers, or adjusting (increasing) the flow rate of the water towards the condenser 13, for water condensers.

Advantageously, as may be inferred from the numerous examples set out above, the machine 1 of this invention allows working confidently with ice cream made from mixtures of any kind, whether balanced or not with respect to one or more ingredients, obtaining optimum results at all times and under any condition, since the machine 1 of this invention can promptly identify and correct the main anomalies that could adversely affect ice cream quality.

Advantageously, also, the machine 1 of this invention can assess the time that is exactly right to take out the ice cream and/or to issue an "ice cream ready" signal, that is, when the texture of the mixture is at its optimum.

It should also be considered that under certain conditions, an ice cream maker uses unbalanced mixtures intentionally (because certain recipes require ingredients of a certain kind, be they sugars, water or fats, to be loaded into the container 2 in proportions which are not optimal); under such conditions, therefore, the machine 1 can produce ice cream with optimum properties even though the mixture that has to be used is not perfectly balanced.

Thus, the machine 1 of this invention is capable of making optimum quality products and at the same time offers the possibility of creating new products to extend the range of products for the ice cream trade.

It should also be considered that the machine 1 of this invention is advantageously capable of processing the ice cream in the shortest possible time and of stopping the batch freezing cycle when the ice cream is really ready, that is to say, when its consistency and texture are just right to optimize its quality.

Furthermore, the machine 1 of this invention is advantageously capable of preventing a plurality of problems that may occur during processing and of taking prompt action to solve them.

Moreover, the machine 1 of this invention is extremely easy to use because it does not require special settings and is also capable of compensating any mistakes that the operator may make in balancing the ingredients but nevertheless always produces an optimum quality ice cream.

According to another aspect, also defined is a method for controlling the machine 1 for making liquid or semiliquid food products according to claim 1. The method according to the invention is defined in appended claim 8.

According to an aspect, the first control module 6 comprises a neural network RN.

According to another aspect, the at least one output U11 represents a classification of a mixture of the base products and the method comprises a step, via the first control module 6, of classifying the mixture being processed in the container 2 into one or more preset categories regarding the balance of the base ingredients.

According to another aspect, the inputs I1, I2, I3, I4, I5, I6, I7 of the first control module (6) comprise one or more of the following inputs:
- a first input I1 associated with a value representing a consistency and/or viscosity of the product being processed in the container 2;
- a second input I2 associated with a value representing an operating temperature of the container 2;
- a third input I3 associated with a value representing an operating temperature of the heat exchanger fluid flowing into the evaporator 10 associated with the container 2;
- a fourth input I4 associated with a value representing an operating temperature of the heat exchanger fluid flowing out of the evaporator 10 associated with the container 2;
- a fifth input I5 associated with a value representing an operating pressure of the heat exchanger fluid flowing out of the compressor 11;
- a sixth input I6 associated with a value representing an operating pressure of the heat exchanger fluid flowing out of the evaporator 10;
- a seventh input I7 associated with a value representing a degree of opening of the throttle element 12.

According to yet another aspect, the method comprises a step of monitoring the signal of the at least one sensor S to ascertain events corresponding to anomalies in the production process.

According to this aspect, the step of driving at least the thermal treatment system 4 and/or the stirrer 3 comprises a step of driving at least the thermal treatment system 4 and/or the stirrer 3 to regulate at least one operating parameter relating to the thermal treatment system 4 and/or to the stirrer 3 as a function of the mixture classification value, corresponding to the at least one output U11 of the first, control module (6), and also of the machine process faults ascertained previously during the step of monitoring.

That is to say, according to this aspect, the combination of the process anomaly ascertained with the classification performed by the first control module 6 regulates one or more of the control parameters.

According to another aspect, the step of training the first control module 6 in supervised mode based on the processing, inside the container 2, of mixtures having differently balanced base ingredients so as to obtain a first control module 6 that is trained to classify a mixture of said base products, comprises the following steps:
- processing the following types of mixtures:
- mixture which is balanced with respect to the base ingredients;
- mixture which is unbalanced with respect to the water ingredient;
- mixture which is unbalanced with respect to the fats;
- mixture which is unbalanced with respect to the sugars;
- during training, providing the first control module 6 with labels relating to the desired category for each type of mixture being processed.

It should be noted that the labels correspond, to all intents and purposes, to the type of mixture being processed, that is to say that, for a balanced mixture, the labels assigned are used to set an output (e.g. U11) at a certain value, corresponding to the desired classification of the type of mixture being processed.

According to yet another aspect, the step of driving at least the thermal treatment system 4 and/or the stirrer 3 to regulate at least one operating parameter relating to the thermal treatment system 4 and/or to the stirrer 3 as a function of the mixture classification value comprises the following steps:
- checking whether the ascertained mixture classification value corresponds to an anomalous state of the mixture, that is, an unbalanced mixture;
- imparting a command to the thermal treatment system 4 and/or the stirrer 3 based also on the result of the check.

According to another aspect, the step of driving at least the thermal treatment system 4 and/or the stirrer 3 to regulate at least one operating parameter relating to the thermal treatment system 4 and/or to the stirrer 3 comprises the following steps:
- comparing the fault detected with the ascertained mixture classification value;
- imparting a command to the thermal treatment system 4 and/or the stirrer 3 based also on the result of the comparison.

According to another aspect, the step of driving at least the thermal treatment system 4 and/or the stirrer 3 to regulate at least one operating parameter relating to the thermal treatment system 4 and/or to the stirrer 3 as a function of the mixture classification value comprises one or more commands for doing the following:
- modifying the opening of a throttle element 12 forming part of the thermal treatment system 4 (thereby regulating the throttle pressure);
- regulating the power of a compressor 11 forming part of the thermal treatment system 4;
- regulating the flow rate of a cooling fluid, air or water, at a condenser 13 forming part of the thermal treatment system 4;
- switching the thermal treatment system 4 between a cooling mode for cooling the container 2 and a heating mode for heating the container 2, the heating mode comprising an operating mode in which the thermal treatment system 4, by injection of hot gas, runs what is known is a hot gas cycle or a heat pump cycle;
- regulating the speed and rotation direction of the stirrer 3.

The control method of this invention is capable of preventing a plurality of problems which may occur during the processing of the product, in particular during the processing of the ice cream, and which may, for example, include the following:
- blocks of ice in the middle of the stirrer 3;
- over-freezing the ingredients;
- end product having wrong consistency and texture.

Basically, the proposed control method is advantageously capable of implementing the most effective corrective action as a function of the properties of the product being processed, thus not only allowing any potential problem to be promptly dealt with but also ensuring that the product made is of optimum quality irrespective of whether the base mixture is balanced or not.

As pointed out in the introduction, ice cream is an extremely complex product and thus its production requires an extremely sophisticated control system based also on the composition of the mixture itself; advantageously, the proposed method allows controlling the ice cream production process in an extremely effective and reliable manner.

According to another aspect, the machine 1 comprises a sensor S which is configured to detect the quantity of base product placed in the processing container 2.

Alternatively, the machine 1 may comprise a user interface configured to detect the quantity of base product placed in the processing container 2.

It should be noted, therefore, that one of the inputs (I1, I2, I3, I4, I5, I6, I7) of the neural network RN, for example, an additional input (not illustrated in the drawings) may be associated with the base product quantity value detected by the sensor S.

It should also be noted that according to another aspect, the training procedure may comprise training the machine to recognize different levels of base product quantity inside the container 2; indeed, that way, the first control module 6 can more accurately classify the mixture even for different quantities loaded in the container 2.

Described below are other embodiments of the first control module 6, also based on machine learning, but alternative to those where the first control module 6 is a neural network.

Where possible, all that was described above in connection with the first control module 6 (generally or with specific reference to a neural network RN) is also applicable to these other embodiments.

In an embodiment, the first control module 6 comprises one or more decision trees.

According to this aspect, for example, the first control module 6 comprises a Random Forest (RF) model.

A Random Forest model is a model made up of any number of decision trees; it should be noted that in such a case, assigning the class as output, that is, classification, is done by combining all the outputs (that is, the decisions or "vote") of all the decision trees to obtain a single result.

Basically, the class provided as output by the first control module 6 is the one that obtains the majority vote.

When training the first control module 6, what are known as "time series forests" are preferably used.

It should be noted that time series of this kind are, in practice, defined by sequences of data values derived (sampled) from the at least one sensor S (or the plurality of sensors S).

The "time series forests" allow training the random forest model not with the raw data but with the features extracted from the time series: for example, mean, standard deviation and slope.

Alternatively, other algorithms based on tree models can be used instead of the time series forests: for example, extreme gradient boosting (XGB) or time series bag-of-features.

Alternatively, the first control module 6 comprises a classification that is configured to define time series distance measurements and kernels such as, for example, k-nearest neighbour (k-NN) or support vector machine (SVM), respectively.

In another embodiment, the first control module 6 comprises an algorithm for learning a model of the "support vector machine" type.

Advantageously, the support vector machine is a model used for performing binary classification but can also be used for multiclass classification (by subdividing the first module 6 into interconnected submodules, each configured to perform a binary classification).

In the case of binary classification, the first control module 6 of the support vector machine type preferably receives as input a training dataset of a plurality of input time series, belonging to two classes, with the associated labels.

Basically, in this training procedure, several time series, each associated with a specific class, can be entered as input; the classes, as already stated above, might include mixtures in which one or more of the base ingredients are balanced to varying degrees.

Considering a training input dataset {(Xt, yt)}, t = 1,2,...,T, where y belongs to {0,1}, the training procedure allows constructing a decision function f(X) which correctly classifies a time series which does not form part of the training time series.

During the training procedure, the support vector machine determines the hyperplane that separates the input data belonging to the two classes.

If the training series are linearly separable, the decision function f(X) will be a linear function (linear SVM classifier) called "decision boundary".

The decision boundary is found in such a way that the margin, that is, the distance between the decision boundary and the nearest data item is as large as possible.

For many datasets, a hyperplane is unlikely to be a good classifier and thus, more geometries are typically adopted, mapping the training data in a higher dimensional space and finding a hyperplane in the new space.

In such a case, the first control module 6 comprises a kernel-based SVM: the classification of the points is performed in the multidimensional space using a "kernel function" (typical choices are polynomial kernel or RBF, i.e. radial basis function).

In the case of multiclass classification, the first control module 6 comprises a plurality of binary SVM classifiers which work synergically; in particular, for n classes, it is necessary to use (n(n-1))/2 binary classifiers.

In such a case, therefore, the first classification module 6 will comprise a plurality of binary SVM classifiers.

This approach is called "one vs one multiclass classification"; according to this strategy, each trained SVM classifier is capable of separating the points into two different classes.

In another embodiment, the first control module 6 comprises a k-NN (k-nearest neighbour) classifier configured to "include" new samples in the training space before classifying them.

According to this aspect, the input of the first control module 6 consists of k training examples and the output is their belonging to a class.

It should be noted, therefore, that according to this aspect, the first control module 6 comprising a k-NN classifier does not include any step of training a model.

A point is classified as a majority vote of its neighbouring points, that is to say, the class assigned to it is the most common of its "k-nearest" neighbours. For time series classification, the basis is the idea that it is necessary to verify the similarity between time series.

The "majority vote" technically requires a majority greater than 50%, which works mainly when there are only two classes. If there are more than two classes, for example, four classes, a class label with a vote greater than 25% may be assigned.

According to another aspect, the first classification module 6 is configured to implement what is known as the "bag-of-words" (dictionary-based) method.

According to this method, the time series are discretized into sequences of symbols, then words are extracted from these sequences with a sliding window, and lastly the number of words for all the words in the dictionary is counted.

The first classification module 6 is configured to implement the above-mentioned steps.

In an embodiment, the first classification module 6 is configured to implement what is known as a Symbolic Aggregate Approximation (SAX): according to this aspect, the time series is discretized into a sequence of symbols so as to then apply sequence data mining methods.

In another embodiment, the first classification module 6 is configured to implement a symbolic Fourier approximation: the representation of the sequence is produced by representing the signal as a discrete Fourier transform, hence a frequency domain representation instead of a time domain representation.

The above emphasizes that according to the invention, the first control module 6 can implement different classification strategies (for classifying the mixture) without departing from the scope of the invention as defined in the appended claims.

## Claims

1. A machine (1) for making liquid or semiliquid or semisolid food products, comprising:
- a processing container (2) for processing base products;
- a stirrer (3) adapted to mix products inside the processing container (2) that processes the base products;
- a thermal treatment system (4), configured to exchange heat with the processing container (2) that processes the base products;
- a control unit (5), connected to the thermal treatment system (4) and to the stirrer (3) to drive them;
- at least one sensor (S), configured to detect an operating parameter of the machine;
the machine (1) being **characterized in that** the control unit (5) comprises:
- a first artificial intelligence control module (6), configured to define a pre-trained classifier (CL) having at least one input (11, I2, I3, I4, I5, I6, I7) and at least one output (U11), where the at least one input (11) is connected to the sensor (S) and wherein the at least one output (U11) of the first control module (6) represents a classification of a mixture of the base products;
- a drive module (7) connected to the output (U11) of the first control module (6) and at least to the thermal treatment system (4) and/or to the stirrer (3) to regulate at least one operating parameter relating to the thermal treatment system (4) and/or to the stirrer (3) as a function of the value of the at least one output (U11) of the first control module (6), the machine further comprising a second control module (8), connected to the at least one sensor (S), configured for processing and/or detecting faults based on the data of the at least one sensor (S), the second control module (8) having at least a first control output (U21) connected to the drive module (7), wherein the drive module (7) is configured to regulate at least one operating parameter relating to the thermal treatment system (4) and/or to the stirrer (3) as a function of the value of the output (U11) of the first control module (6) and of the value of the output (U21) of the second control module (8), wherein the first control module (6) comprises a plurality of inputs (I1, I2, I3, I4, I5, I6, I7), wherein the second control module (8) further comprises a second control output (U22), connected to one (I2) of the inputs (I1, I2, I3, I4, I5, I6, I7) of the first control module (6) to transmit control information to the first control module (6), wherein the at least one sensor (S) is configured to detect a value pertaining to the power supply of a motor connected to the stirrer (3) to drive it and the second control module (8) is configured to derive, from the value pertaining to the power supply of a motor, a parameter associated with the consistency and/or viscosity of the product being processed in the container (2), wherein the parameter associated with the consistency and/or viscosity of the product being processed in the container (2) is included between a minimum value, corresponding to a product to be processed, and a maximum value, corresponding to a finished product,
wherein the control module (6) is trained based on the processing, inside the container (2), of mixtures having differently balanced base ingredients.

2. The machine (1) according to claim 1, wherein the first control module (6) is configured to perform a classification at a plurality of time intervals included between the start and the end of processing, thereby performing what is known as "early classification", and by iterative refinement at different time intervals, to gradually improve the accuracy of the classification.

3. The machine (1) according to any one of claims 1 to 2, wherein the first control module (6) comprises a neural network (RN) comprising a plurality of layers (S1, S2, S3, S4, S5, S6) and having a plurality of inputs (I1, I2, I3, I4, I5, I6, I7).

4. The machine (1) according to any one of the preceding claims, wherein the inputs (11, I2, I3, I4, I5, I6, I7) of the first control module (6) comprise one or more of the following inputs:
- a first input (11) associated with a value representing a consistency and/or viscosity of the product being processed in the container (2);
- a second input (I2) associated with a value representing an operating temperature of the container (2);
- a third input (I3) associated with a value representing an operating temperature of the heat exchanger fluid flowing into the evaporator (10) associated with the container (2);
- a fourth input (I4) associated with a value representing an operating temperature of the heat exchanger fluid flowing out of the evaporator (10) associated with the container (2);
- a fifth input (I5) associated with a value representing an operating pressure of the heat exchanger fluid flowing out of the compressor (11);
- a sixth input (I6) associated with a value representing an operating pressure of the heat exchanger fluid flowing out of the evaporator (10);
- a seventh input (I7) associated with a value representing a degree of opening of the throttle element (12).

5. The machine (1) for making liquid or semiliquid or semisolid food products according to any one of the preceding claims, wherein the first control module (6) is configured to classify the mixture based on the balance of the ingredients in the mixture being processed in the container (2), at least between a balanced class, corresponding to a mixture being processed which is balanced with respect to one or more ingredients, and an unbalanced class, corresponding to a mixture being processed which is unbalanced with respect to one or more ingredients; the at least one output (U11) of the first control module (6) representing the classification of the mixture being processed in the container (2).

6. The machine (1) for making liquid or semiliquid or semisolid food products according to the preceding claim, wherein the first control module (6) is configured to perform a multiclass classification of the mixture based on the balance of the ingredients in the mixture being processed in the container (2), the first control module (6) comprising a plurality of outputs (U11, U12, U13, U14, U15, U16, U17, U18, U19).

7. The machine (1) for making liquid or semiliquid or semisolid food products according to claim 6, wherein the outputs (U11, U12, U13, U14, U15, U16, U17, U18, U19) of the first control module (6), in their entirety, are associated with two or more of the following classes of mixture being processed:
- product being processed in the container (2) is balanced with respect to at least one base ingredient;
- product being processed in the container (2) is unbalanced with respect to the water ingredient;
- product being processed in the container (2) is unbalanced with respect to the fats;
- product being processed in the container (2) is unbalanced with respect to the sugar.

8. A method for controlling a machine (1) for making liquid or semiliquid food products, comprising the following steps:
- providing a machine (1) for making liquid or semiliquid food products, having:
- a processing container (2) for processing base products;
- a stirrer (3) adapted to mix products inside the processing container (2) that processes the base products;
- a thermal treatment system (4), configured to exchange heat with the processing container (2) that processes the base products;
- at least one sensor (S), configured to detect an operating parameter of the machine;
- providing a first artificial intelligence control module (6), configured to define a classifier (CL) having at least one input (I1, I2, I3, I4, I5, I6, I7) and at least one output (U11), where the at least one input (11) is connected to the at least one sensor (S) and wherein the at least one output (U11) of the first control module (6) represents a classification of a mixture of the base products, wherein the first control module (6) comprises a plurality of inputs (11, I2, I3, I4, I5, I6, I7), wherein the at least one sensor (S) is configured to detect a value pertaining to the power supply of a motor connected to the stirrer (3) to drive it;
- providing a second control module (8), connected to the at least one sensor (S), configured for processing and/or detecting faults based on the data of the at least one sensor (S), the second control module (8) having at least a first control output (U21) connected to the drive module (7), wherein the second control module (8) further comprises a second control output (U22), connected to one (I2) of the inputs (11, I2, I3, I4, I5, I6, I7) of the first control module (6) to transmit control information to the first control module (6) and wherein the second control module (8) is configured to derive, from the value pertaining to the power supply of a motor, a parameter associated with the consistency and/or viscosity of the product being processed in the container (2), wherein the parameter associated with the consistency and/or viscosity of the product being processed in the container (2) is included between a minimum value, corresponding to a product to be processed, and a maximum value, corresponding to a finished product;
- training the first artificial intelligence control module (6) based on the processing of different mixtures, having differently balanced base ingredients, inside the container (2), so as to obtain a first, trained control module (6);
- feeding a mixture to the container (2) and starting the processing cycle;
- driving at least the thermal treatment system (4) and/or the stirrer (3) to regulate at least one operating parameter relating to the thermal treatment system (4) and/or to the stirrer (3) as a function of the value of the at least one output (U11) of the first, trained control module (6) and of the value of the output (U21) of the second control module (8).

## Patentansprüche

1. Maschine (1) zur Herstellung von flüssigen oder halbflüssigen oder halbfesten Lebensmittelprodukten, umfassend:
- einen Verarbeitungsbehälter (2) zum Verarbeiten von Basisprodukten;
- ein Rührwerk (3), das angepasst ist, um Produkte innerhalb des Verarbeitungsbehälters (2) zu mischen, der die Basisprodukte verarbeitet;
- ein Wärmebehandlungssystem (4), das ausgelegt ist, um Wärme mit dem Verarbeitungsbehälter (2) auszutauschen, der die Basisprodukte verarbeitet;
- eine Steuerungseinheit (5), die mit dem Wärmebehandlungssystem (4) und dem Rührwerk (3) verbunden ist, um sie anzutreiben;
- mindestens einen Sensor (S), der ausgelegt ist, um einen Betriebsparameter der Maschine zu erfassen; wobei die Maschine (1) **dadurch gekennzeichnet ist, dass** die Steuerungseinheit (5) Folgendes umfasst:
- ein erstes Steuerungsmodul (6) für künstliche Intelligenz, das dazu ausgelegt ist, einen vortrainierten Klassifikator (CL) mit mindestens einem Eingang (I1, I2, I3, I4, I5, I6, I7) und mindestens einem Ausgang (U11) zu definieren, wobei der mindestens eine Eingang (I1) mit dem Sensor (S) verbunden ist und wobei der mindestens eine Ausgang (U11) des ersten Steuerungsmoduls (6) eine Klassifizierung einer Mischung der Basisprodukte darstellt;
- ein Antriebsmodul (7), das mit dem Ausgang (U11) des ersten Steuerungsmoduls (6) und mindestens mit dem Wärmebehandlungssystem (4) und/oder dem Rührwerk (3) verbunden ist, um mindestens einen Betriebsparameter in Bezug auf das Wärmebehandlungssystem (4) und/oder das Rührwerk (3) in Abhängigkeit von dem Wert des mindestens einen Ausgangs (U11) des ersten Steuerungsmoduls (6) zu regeln, wobei die Maschine ferner ein zweites Steuerungsmodul (8) umfasst, das mit dem mindestens einen Sensor (S) verbunden ist, der ausgelegt ist, um Fehler basierend auf den Daten des mindestens einen Sensors (S) zu verarbeiten und/oder zu erfassen, wobei das zweite Steuerungsmodul (8) mindestens einen ersten Steuerungsausgang (U21) aufweist, der mit dem Antriebsmodul (7) verbunden ist, wobei das Antriebsmodul (7) ausgelegt ist, um mindestens einen Betriebsparameter in Bezug auf das Wärmebehandlungssystem (4) und/oder das Rührwerk (3) in Abhängigkeit von dem Wert des Ausgangs (U11) des ersten Steuerungsmoduls (6) und dem Wert des Ausgangs (U21) des zweiten Steuerungsmoduls (8) zu regeln, wobei das erste Steuerungsmodul (6) eine Vielzahl von Eingängen (I1, I2, I3, I4, I5, I6, I7) umfasst, wobei das zweite Steuerungsmodul (8) ferner einen zweiten Steuerungsausgang (U22) umfasst, der mit einem (I2) der Eingänge (I1, I2, I3, I4, I5, I6, I7) des ersten Steuerungsmoduls (6) verbunden ist, um Steuerungsinformationen an das erste Steuerungsmodul (6) zu übertragen, wobei der mindestens eine Sensor (S) ausgelegt ist, um einen Wert zu erfassen, der sich auf die Stromversorgung eines Motors bezieht, der mit dem Rührwerk (3) verbunden ist, um es anzutreiben, und das zweite Steuerungsmodul (8) ausgelegt ist, um aus dem Wert, der sich auf die Stromversorgung eines Motors bezieht, einen Parameter abzuleiten, der mit der Konsistenz und/oder Viskosität des in dem Behälter (2) verarbeiteten Produkts assoziiert ist, wobei der Parameter, der mit der Konsistenz und/oder der Viskosität des in dem Behälter (2) verarbeiteten Produkts assoziiert ist, zwischen einem Mindestwert, der einem zu verarbeitenden Produkt entspricht, und einen Maximalwert, der einem Fertigprodukt entspricht, enthalten ist, wobei das Steuerungsmodul (6) basierend auf der Verarbeitung von Mischungen mit unterschiedlich ausgewogenen Basisinhaltsstoffen innerhalb des Behälters (2) trainiert wird.

2. Maschine (1) nach Anspruch 1, wobei das erste Steuerungsmodul (6) dazu ausgelegt ist, eine Klassifizierung in einer Vielzahl von Zeitintervallen durchzuführen, die zwischen dem Beginn und dem Ende der Verarbeitung enthalten sind, wodurch eine so genannte "frühe Klassifizierung" durchgeführt wird, und durch iteratives Verfeinern in verschiedenen Zeitintervallen, um die Genauigkeit der Klassifizierung allmählich zu verbessern.

3. Maschine (1) nach einem der Ansprüche 1 bis 2, wobei das erste Steuerungsmodul (6) ein neuronales Netzwerk (RN) umfasst, das eine Vielzahl von Schichten (S1, S2, S3, S4, S5, S6) umfasst und eine Vielzahl von Eingängen (I1, I2, I3, I4, I5, I6, I7) aufweist.

4. Maschine (1) nach einem der vorhergehenden Ansprüche, wobei die Eingänge (I1, I2, I3, I4, I5, I6, I7) des ersten Steuerungsmoduls (6) einen oder mehrere der folgenden Eingänge umfassen:
- einen ersten Eingang (I1), der mit einem Wert assoziiert ist, der eine Konsistenz und/oder Viskosität des in dem Behälter (2) verarbeiteten Produkts darstellt;
- einen zweiten Eingang (I2), der mit einem Wert assoziiert ist, der eine Betriebstemperatur des Behälters (2) darstellt;
- einen dritten Eingang (I3), der mit einem Wert assoziiert ist, der eine Betriebstemperatur des Wärmetauscherfluids darstellt, das in den Verdampfer (10) strömt, der mit dem Behälter (2) assoziiert ist;
- einen vierten Eingang (I4), der mit einem Wert assoziiert ist, der eine Betriebstemperatur des Wärmetauscherfluids darstellt, das aus dem Verdampfer (10) strömt, der mit dem Behälter (2) assoziiert ist;
- einen fünften Eingang (I5), der mit einem Wert assoziiert ist, der einen Betriebsdruck des Wärmetauscherfluids darstellt, das aus dem Kompressor (11) strömt;
- einen sechsten Eingang (I6), der mit einem Wert assoziiert ist, der einen Betriebsdruck des Wärmetauscherfluids darstellt, das aus dem Verdampfer (10) strömt;
- einen siebten Eingang (I7), der mit einem Wert assoziiert ist, der einen Öffnungsgrad des Drosselelements (12) darstellt.

5. Maschine (1) zur Herstellung von flüssigen oder halbflüssigen oder halbfesten Lebensmittelprodukten nach einem der vorhergehenden Ansprüche, wobei das erste Steuerungsmodul (6) dazu ausgelegt ist, die Mischung basierend auf dem Gleichgewicht der Inhaltsstoffe in der in dem Behälter (2) verarbeiteten Mischung, mindestens zwischen einer ausgewogenen Klasse, die einer verarbeiteten Mischung entspricht, die in Bezug auf einen oder mehrere Inhaltsstoffe ausgewogen ist, und einer nicht ausgewogenen Klasse, die einer verarbeiteten Mischung entspricht, die in Bezug auf einen oder mehrere Inhaltsstoffe unausgewogen ist, zu klassifizieren; wobei der mindestens eine Ausgang (U11) des ersten Steuerungsmoduls (6) die Klassifizierung der in dem Behälter (2) verarbeiteten Mischung darstellt.

6. Maschine (1) zur Herstellung von flüssigen oder halbflüssigen oder halbfesten Lebensmittelprodukten nach dem vorhergehenden Anspruch, wobei das erste Steuerungsmodul (6) dazu ausgelegt ist, eine Multiklassenklassifizierung der Mischung basierend auf dem Gleichgewicht der Inhaltsstoffe in der in dem Behälter (2) verarbeiteten Mischung durchzuführen, wobei das erste Steuerungsmodul (6) eine Vielzahl von Ausgängen (U11, U12, U13, U14, U15, U16, U17, U18, U19) umfasst.

7. Maschine (1) zur Herstellung von flüssigen oder halbflüssigen oder halbfesten Lebensmittelprodukten nach Anspruch 6, wobei die Ausgänge (U11, U12, U13, U14, U15, U16, U17, U18, U19) des ersten Steuerungsmoduls (6) in ihrer Gesamtheit mit zwei oder mehr der folgenden verarbeiteten Mischungsklassen assoziiert sind:
- das in dem Behälter (2) verarbeitete Produkt in Bezug auf mindestens einen Basisinhaltsstoff ausgewogen ist;
- das in dem Behälter (2) verarbeitete Produkt in Bezug auf den Wasserinhaltsstoff unausgewogen ist;
- das in dem Behälter (2) verarbeitete Produkt in Bezug auf die Fette unausgewogen ist;
- das in dem Behälter (2) verarbeitete Produkt in Bezug auf den Zucker unausgewogen ist.

8. Verfahren zur Steuerung der Maschine (1) zur Herstellung von flüssigen oder halbflüssigen Lebensmittelprodukte nach Anspruch 1, umfassend die folgenden Schritte:
- Trainieren des ersten Steuerungsmoduls (6) für künstliche Intelligenz basierend auf der Verarbeitung verschiedener Mischungen mit unterschiedlich ausgewogenen Basisinhaltsstoffen innerhalb des Behälters (2), um den vortrainierten Klassifikator (CL) zu erhalten;
- Zuführen einer Mischung zu dem Behälter (2) und Starten des Verarbeitungszyklus;
- Antreiben zumindest des Wärmebehandlungssystems (4) und/oder des Rührwerks (3), um mindestens einen Betriebsparameter in Bezug auf das Wärmebehandlungssystem (4) und/oder das Rührwerk (3) in Abhängigkeit von dem Wert des zumindest einen Ausgangs (U11) des ersten, trainierten Steuerungsmoduls (6) und dem Wert des Ausgangs (U21) des zweiten Steuerungsmoduls (8) zu regeln.

## Revendications

1. Machine (1) de fabrication de produits alimentaires liquides, semi-liquides ou semi-solides, comprenant :
- un récipient de transformation (2) destiné à la transformation de produits de base ;
- un agitateur (3) adapté pour mélanger les produits à l'intérieur du récipient de transformation (2) qui transforme les produits de base ;
- un système de traitement thermique (4), configuré pour échanger de la chaleur avec le récipient de transformation (2) qui transforme les produits de base ;
- une unité de commande (5), reliée au système de traitement thermique (4) et à l'agitateur (3) pour les actionner ;
- au moins un capteur (S), configuré pour détecter un paramètre de fonctionnement de la machine ;
la machine (1) étant **caractérisée en ce que** l'unité de commande (5) comprend :
- un premier module de commande d'intelligence artificielle (6), configuré pour définir un classificateur pré-entraîné (CL) comportant au moins une entrée (I1, I2, I3, I4, I5, I6, I7) et au moins une sortie (U11), où l'au moins une entrée (I1) est reliée au capteur (S) et dans laquelle l'au moins une sortie (U11) du premier module de commande (6) représente une classification d'un mélange des produits de base ;
- un module d'actionnement (7) relié à la sortie (U11) du premier module de commande (6) et au moins au système de traitement thermique (4) et/ou à l'agitateur (3) afin de régler au moins un paramètre de fonctionnement relatif au système de traitement thermique (4) et/ou à l'agitateur (3) en fonction de la valeur de l'au moins une sortie (U11) du premier module de commande (6), la machine comprenant en outre un second module de commande (8), relié à l'au moins un capteur (S), configuré pour traiter et/ou détecter des défauts sur la base des données de l'au moins un capteur (S), le second module de commande (8) comportant au moins une première sortie de commande (U21) reliée au module d'entraînement (7), dans laquelle le module d'actionnement (7) est configuré pour régler au moins un paramètre de fonctionnement relatif au système de traitement thermique (4) et/ou à l'agitateur (3) en fonction de la valeur de la sortie (U11) du premier module de commande (6) et de la valeur de la sortie (U21) du second module de commande (8), dans laquelle le premier module de commande (6) comprend une pluralité d'entrées (I1, I2, I3, I4, I5, I6, I7), dans laquelle le second module de commande (8) comprend en outre une seconde sortie de commande (U22), reliée à l'une (I2) des entrées (I1, I2, I3, I4, I5, I6, I7) du premier module de commande (6) pour transmettre des informations de commande au premier module de commande (6), dans laquelle l'au moins un capteur (S) est configuré pour détecter une valeur concernant l'alimentation électrique d'un moteur relié à l'agitateur (3) afin de l'actionner, et le second module de commande (8) est configuré pour déduire, à partir de la valeur concernant l'alimentation électrique d'un moteur, un paramètre associé à la consistance et/ou à la viscosité du produit en cours de transformation dans le récipient (2), dans laquelle le paramètre associé à la consistance et/ou à la viscosité du produit en cours de transformation dans le récipient (2) se situe entre une valeur minimale, correspondant à un produit à transformer, et une valeur maximale, correspondant à un produit fini, dans laquelle le module de commande (6) est entraîné sur la base de la transformation, à l'intérieur du récipient (2), de mélanges comportant des ingrédients de base dosés différemment.

2. Machine (1) selon la revendication 1, dans laquelle le premier module de commande (6) est configuré pour effectuer une classification à une pluralité d'intervalles de temps compris entre le début et la fin du traitement, réalisant ainsi ce que l'on appelle une « classification précoce », et pour améliorer progressivement la précision de la classification par un affinement itératif à différents intervalles de temps.

3. Machine (1) selon l'une quelconque des revendications 1 à 2, dans laquelle le premier module de commande (6) comprend un réseau neuronal (RN) comprenant une pluralité de couches (S1, S2, S3, S4, S5, S6) et comportant une pluralité d'entrées (I1, I2, I3, I4, I5, I6, I7).

4. Machine (1) selon l'une quelconque des revendications précédentes, dans laquelle les entrées (I1, I2, I3, I4, I5, I6, I7) du premier module de commande (6) comprennent une ou plusieurs des entrées suivantes :
- une première entrée (I1) associée à une valeur représentant la consistance et/ou la viscosité du produit en cours de transformation dans le récipient (2) ;
- une deuxième entrée (I2) associée à une valeur représentant une température de fonctionnement du récipient (2) ;
- une troisième entrée (I3) associée à une valeur représentant une température de fonctionnement du fluide de l'échangeur de chaleur s'écoulant dans l'évaporateur (10) associé au récipient (2) ;
- une quatrième entrée (I4) associée à une valeur représentant une température de fonctionnement du fluide de l'échangeur de chaleur sortant de l'évaporateur (10) associé au récipient (2) ;
- une cinquième entrée (I5) associée à une valeur représentant une pression de fonctionnement du fluide de l'échangeur de chaleur sortant du compresseur (11) ;
- une sixième entrée (I6) associée à une valeur représentant une pression de fonctionnement du fluide de l'échangeur de chaleur sortant de l'évaporateur (10) ;
- une septième entrée (I7) associée à une valeur représentant un degré d'ouverture de l'élément d'étranglement (12).

5. Machine (1) de fabrication de produits alimentaires liquides, semi-liquides ou semi-solides selon l'une quelconque des revendications précédentes, dans laquelle le premier module de commande (6) est configuré pour classer le mélange sur la base du dosage des ingrédients dans le mélange en cours de transformation dans le récipient (2), au moins entre une classe « équilibrée », correspondant à un mélange en cours de transformation qui est équilibré par rapport à un ou plusieurs ingrédients, et une classe « déséquilibrée », correspondant à un mélange en cours de transformation qui est déséquilibré par rapport à un ou plusieurs ingrédients ; l'au moins une sortie (U11) du premier module de commande (6) représentant la classification du mélange en cours de transformation dans le récipient (2).

6. Machine (1) de fabrication de produits alimentaires liquides, semi-liquides ou semi-solides selon la revendication précédente, dans laquelle le premier module de commande (6) est configuré pour effectuer une classification en plusieurs classes du mélange sur la base du dosage des ingrédients présents dans le mélange en cours de transformation dans le récipient (2), le premier module de commande (6) comprenant une pluralité de sorties (U11, U12, U13, U14, U15, U16, U17, U18, U19).

7. Machine (1) de fabrication de produits alimentaires liquides, semi-liquides ou semi-solides selon la revendication 6, dans laquelle les sorties (U11, U12, U13, U14, U15, U16, U17, U18, U19) du premier module de commande (6), dans leur ensemble, sont associées à au moins deux des classes suivantes de mélange en cours de transformation :
- le produit en cours de transformation dans le récipient (2) est équilibré par rapport à au moins un ingrédient de base ;
- le produit en cours de transformation dans le récipient (2) est déséquilibré par rapport à la teneur en eau ;
- le produit en cours de transformation dans le récipient (2) est déséquilibré par rapport aux matières grasses ;
- le produit en cours de transformation dans le récipient (2) est déséquilibré par rapport à la teneur en sucre.

8. Procédé de commande de la machine (1) de fabrication de produits alimentaires liquides ou semi-liquides selon la revendication 1, comprenant les étapes suivantes :
- entraîner le premier module de commande d'intelligence artificielle (6) sur la base de la transformation, à l'intérieur du récipient (2), de différents mélanges comportant des ingrédients de base dosés différemment, de manière à obtenir le classificateur pré-entraîné (CL) ;
- introduire un mélange dans le récipient (2) et lancer le cycle de transformation ;
- actionner au moins le système de traitement thermique (4) et/ou l'agitateur (3) afin de régler au moins un paramètre de fonctionnement relatif au système de traitement thermique (4) et/ou à l'agitateur (3) en fonction de la valeur de l'au moins une sortie (U11) du premier module de commande (6) entraîné et de la valeur de la sortie (U21) du second module de commande (8).
